# EUROPEAN PATENT APPLICATION

(11) **EP 4 672 568 A1**
(43) Date of publication of application: **31.12.2025**
(21) Application number: 25180076.9
(22) Date of filing: 02.06.2025
(51) Int. Cl.: H02K 5/22, H02K 11/21, H02K 11/25

(54) **ROTARY ELECTRIC MACHINE AND MANUFACTURING METHOD OF ROTARY ELECTRIC MACHINE**

(30) Priority: 18.06.2024 JP 2024098108
(71) Applicant: MAZDA MOTOR CORPORATION, Hiroshima 730-8670 (JP)
(72) Inventor: Uchise, Hideaki, Aki-gun, Hiroshima 730-8670 (JP); Kawasaki, Shota, Aki-gun, Hiroshima 730-8670 (JP); Tsukishita, Yuki, Aki-gun, Hiroshima 730-8670 (JP); Nakano, Atsushi, Aki-gun, Hiroshima 730-8670 (JP); Imura, Arashi, Aki-gun, Hiroshima 730-8670 (JP)
(74) Representative: Lorenz Seidler Gossel Part. mbB

(57) **Abstract**

In a rotary electric machine, both connection work of a terminal in a terminal block and connection work of a connector in a sensor are efficiently performed by using a common service hole provided in a casing. The rotary electric machine includes: a terminal block that holds a terminal electrically connected to a stator; and the casing that accommodates the stator and the terminal block. The casing is formed by combining a first casing and a second casing. The first casing holds the terminal block, a first sensor, a first wire, and a first connector. The second casing holds an external connector, a second wire, and a second connector. The second casing has a service hole for facing the terminal block from the outside of the casing when the first casing and the second casing are combined. The first connector and the second connector correspond to each other. The first connector is arranged at a position facing from the outside of the casing via the service hole when the first casing and the second casing are combined.

## Description

The present disclosure relates to a rotary electric machine and a manufacturing method of a rotary electric machine.

### [Background Art]

The rotary electric machine includes: a casing that accommodates a stator; and a terminal block that holds a terminal electrically connected to the stator. When the rotary electric machine is installed, it is necessary to perform connection work of the terminal in the terminal block.

In order to facilitate the connection work of the terminal in the terminal block, for example, as described in JP2023-3709A and Japanese Patent No. 6,552,671, there is a method for providing the terminal block to an outer wall of the casing and exposing it to the outside.

In order to facilitate the connection work of the terminal in the terminal block, in addition to the above, there is a method for accommodating the terminal block in the casing and providing, to the casing, a service hole for facing the terminal block from the outside. In this method, a worker puts his/her hand or a tool on the inside of the casing via the service hole to perform the connection work of the terminal in the terminal block.

By the way, the rotary electric machine is usually provided with a sensor. Since the sensor is arranged at a position corresponding to application, there is a case where wire connection work is required between the sensor and an external device using output of the sensor during assembly or installation work of the rotary electric machine. It is desired to simultaneously perform connection work of the sensor to a connector of the wire and the connection work of the terminal in the terminal block by using a common service hole.

An object of the present disclosure is simultaneously and efficiently performing connection work of a terminal in a terminal block and a connection work of a connector to a sensor by using a common service hole provided to a casing in a rotary electric machine.

A rotary electric machine according to the present disclosure includes: a terminal block that holds a terminal electrically connected to a stator; and a casing that accommodates the stator and the terminal block. The casing is formed by combining a first casing and a second casing. The first casing holds the terminal block, a first sensor, a first wire extending from the first sensor, and a first connector provided to the first wire, the second casing holds an external connector exposed to outside of the casing and connectable from the outside of the casing, a second wire extending from the external connector, and a second connector provided to the second wire, the second casing has a service hole for facing the terminal block from the outside of the casing when the first casing and the second casing are combined to constitute the casing, the first connector and the second connector correspond to be connectable to each other, and the first connector is arranged at a position that can be faced from the outside of the casing via the service hole when the first casing and the second casing are combined to constitute the casing.

The first casing and the second casing are combined to constitute the casing.

At this time, a worker on the outside of the casing can perform connection work of the terminal in the terminal block by using the service hole.

Furthermore, the worker on the outside of the casing can connect the second connector to the first connector by using the common service hole.

In this way, the second casing can be provided with the external connector in a manner to be exposed to the outside while the first sensor is provided to the first casing side in advance without separately adding a service hole for connecting the connector of the sensor wire. In addition, the connection work of the terminal and the connection work between the first connector and the second connector can be performed simultaneously. It is possible to improve assembly work efficiency and improve a degree of freedom in design of the rotary electric machine.

In addition, when electric power supply from the outside of the casing is required to operate the first sensor, the electric power can be supplied from the outside of the casing to the first sensor via the external connector, the second wire, the second connector, the first connector, and the first wire. In this way, the first sensor can be operated without performing separate connection work for providing a power line.

As it has been described so far, it is possible to simultaneously and efficiently perform the connection work of the terminal in the terminal block and the connection work between the first connector and the second connector for operating the first sensor, by using the common service hole provided to the casing in the rotary electric machine.

In one embodiment, the second wire has a length capable of taking the second connector to the outside of the second casing via the service hole.

In a state where the second connector is taken to the outside of the second casing via the service hole, the first casing and the second casing are combined to constitute the casing. At this time, since the second connector is located on the outside of the casing, it is possible to prevent the second wire and the second connector from being sandwiched between the first casing and the second casing or from interfering with a structure such as the terminal in the casing without additionally providing a portion or a jig for temporarily holding the second wire and the second connector. The first casing and the second casing can be combined easily.

In addition, the worker on the outside of the casing can easily grasp the second connector. The connection work between the first connector and the second connector by using the service hole can be performed easily.

In one embodiment, the second casing holds a second sensor, and the second sensor is connected to the external connector via a third wire.

The single external connector can provide functions to supply the electric power and transmit a signal for operating both the first sensor and the second sensor.

In one embodiment, the terminal block is made of a resin, and the first wire extends such that the first connector is arranged on an opposite side of the terminal block from the terminal.

It is possible to prevent the first connector from contacting the terminal and being short-circuited.

In one embodiment, the second wire extends such that the second connector is located below the terminal when the first casing and the second casing are combined to constitute the casing.

Unless the second connector moves upward against a gravitational force, the second connector does not contact the terminal. It is possible to prevent the second connector from contacting the terminal and being short-circuited.

In one embodiment, the first sensor is a thermometer.

A temperature of the rotary electric machine can be measured by the first sensor.

In one embodiment, the second sensor is a rotational position detection sensor.

A rotational position of a rotating body in the rotary electric machine can be detected by the second sensor.

In one embodiment, the terminal block has a flow path through which a refrigerant flows.

The terminal that is held by the terminal block can be cooled by the refrigerant flowing through the flow path.

In one embodiment, the rotary electric machine is mounted on a vehicle.

It is possible to improve production efficiency of the vehicle equipped with the rotary electric machine.

A manufacturing method of a rotary electric machine according to the present disclosure is a method for manufacturing the above-described rotary electric machine and includes: a preparation step of preparing the first casing and the second casing; a take-out step of taking the second connector to the outside of the second casing via the service hole; an assembly step of combining the first casing and the second casing to constitute the casing; and a connection step of connecting the first connector and the second connector by using the service hole.

According to the present disclosure, it is possible to simultaneously and efficiently perform the connection work of the terminal in the terminal block and the connection work of the wire in the sensor by using the common service hole provided to the casing in the rotary electric machine.

### Brief Description of Drawings:

FIG. 1 illustrates a vehicle.
FIG. 2 is a plan view in which a drive unit is viewed from above.
FIG. 3 is a front view in which the drive unit is viewed from the front.
FIG. 4 illustrates a structure of a motor.
FIG. 5 illustrates a cooling structure of the motor.
FIG. 6 illustrates an energization structure between the motor and an inverter.
FIG. 7 illustrates an energization structure between the motor and the inverter in an enlarged manner.
FIG. 8 is a perspective view in which an inverter-side terminal block is viewed from above.
FIG. 9 is a perspective view in which the inverter-side terminal block is viewed from below.
FIG. 10 is a perspective view in which a motor-side terminal block is viewed from above.
FIG. 11 is a perspective view in which the motor-side terminal block is viewed from below.
FIG. 12 is a plan view in which a fixing surface of a motor block is viewed from above.
FIG. 13 is a perspective view of a first motor block.
FIG. 14 is a perspective view of a second motor block.
FIG. 15 illustrates a combination of the first motor block and the second motor block.
FIG. 16 illustrates connection between a thermometer connector and a relay connector.

Hereinafter, an embodiment of the present disclosure will be described in detail with reference to the drawings. The following description of the preferred embodiment is merely illustrative in nature and is not intended to limit the present disclosure, application subjects thereof, or application thereof.

A rotary electric machine according to the present embodiment will be described. From a functional viewpoint, the rotary electric machine is an electric motor, a generator, or a generator motor. The rotary electric machine is suitable as a drive source of a vehicle. The rotary electric machine functions as an electrical generator (a generator) during regeneration but mainly functions as the electric motor (a motor). In this example, a description will be made on the rotary electric machine as the motor.

A front-rear direction, a left-right direction, and an up-down direction will be based on a vehicle 1. In each of the drawings, these directions are each indicated by an arrow. The front-rear direction corresponds to an advancing direction of the vehicle 1. The left-right direction corresponds to a vehicle width direction of the vehicle 1. The up-down direction corresponds to a height direction of the vehicle 1.

A direction in which a rotation axis J of a drive unit DU extends will be referred to as an axial direction. A direction orthogonal to the rotation axis J will be referred to as a radial direction. An outer side in a radial direction will be referred to as an outer circumferential side. An inner side in the radial direction will be referred to as an inner circumferential side. A rotational direction of the rotation axis J and an opposite direction thereto will each be referred to as a circumferential direction.

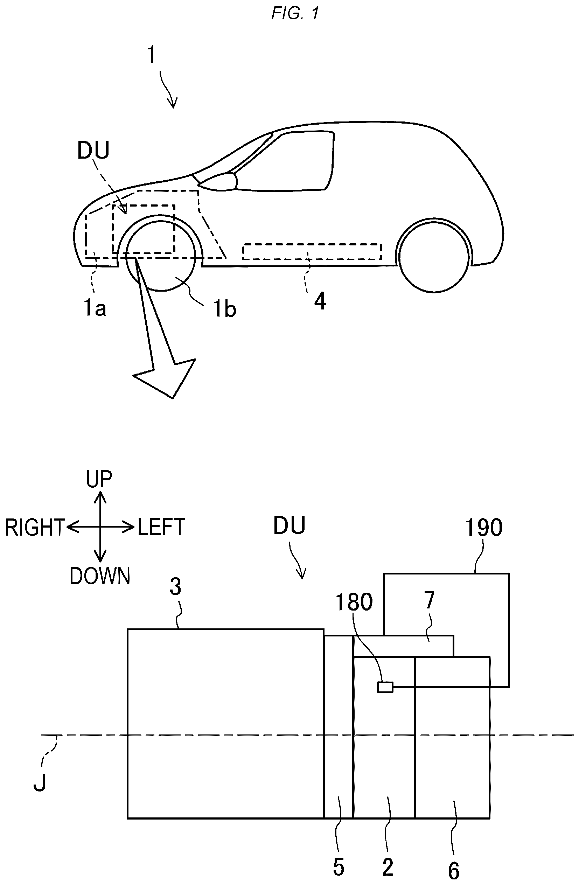

FIG. 1 illustrates the vehicle 1. The vehicle 1 is a so-called hybrid vehicle. The vehicle 1 includes a motor 2, an engine 3, a battery 4, a joint 5, a transmission 6, and an inverter 7.

The motor 2, the engine 3, the joint 5, and the transmission 6 are integrally assembled and constitute the drive unit DU. The drive unit **DU** is mounted in a front compartment 1a of the vehicle 1. The drive unit DU rotationally drives left and right front wheels 1b. The vehicle 1 is a so-called FF vehicle.

The drive unit DU is transversely arranged in the vehicle 1 such that the rotation axis J thereof extends in the vehicle width direction (the left-right direction). The engine 3 is an in-line, cylinder reciprocating engine. A type and performance of the engine 3 can be selected appropriately.

The battery 4 is mounted under a floor panel of the vehicle 1. The battery 4 has a high voltage and large capacity and functions as a power source of the motor 2.

The drive unit DU includes the joint 5 and the transmission 6 together with the motor 2 and the engine 3. The motor 2 is electrically connected to the battery 4 via the inverter 7. Under control of the inverter 7, the motor 2 is driven by electric power that is input from the battery 4.

During travel of the vehicle 1 by driving of the motor 2, the inverter 7 converts DC power of the battery 4 into AC power of three phases (a U phase, a V phase, and a W phase) including different phases, and inputs the AC power to the motor 2. Consequently, the motor 2 rotates.

During the regeneration that is associated with deceleration of the vehicle 1, the inverter 7 converts the AC power generated by the motor 2 into the DC power, and outputs the DC power to the battery 4.

### (Drive Unit)

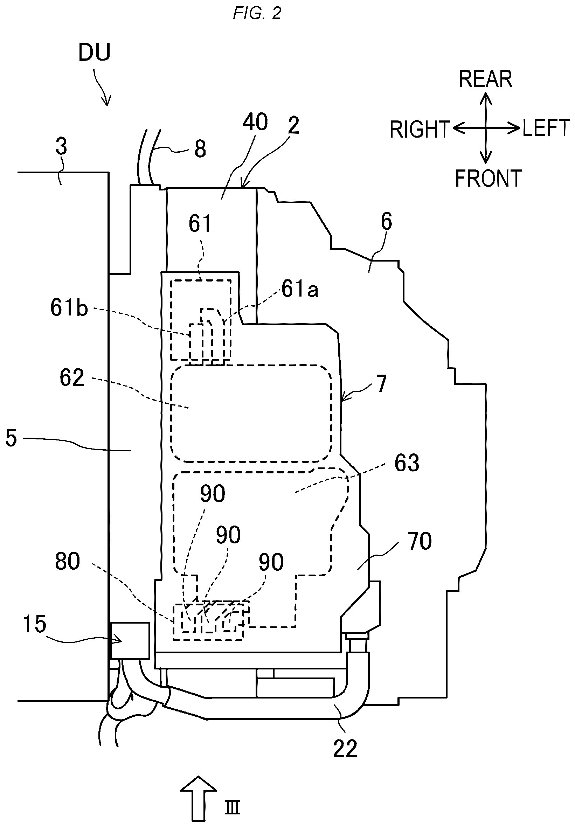

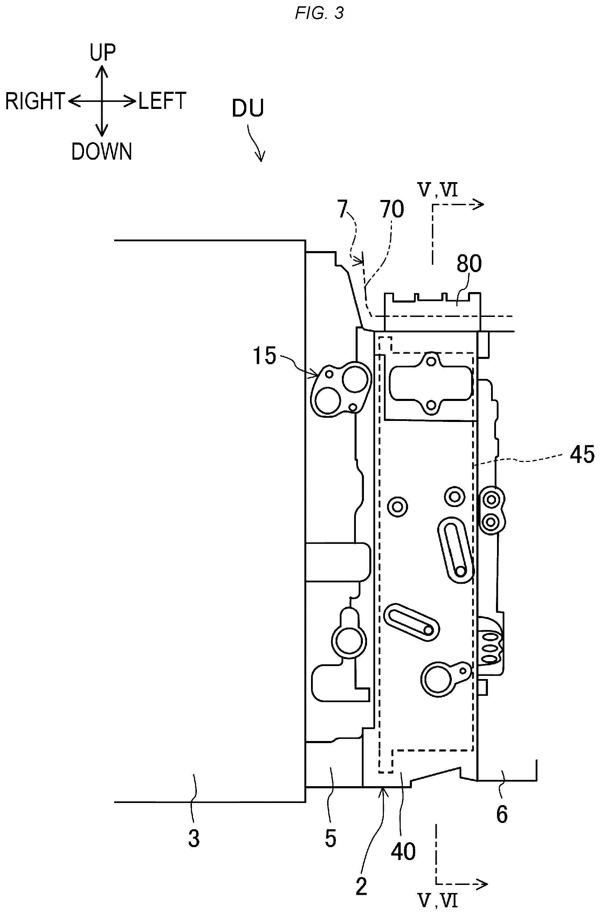

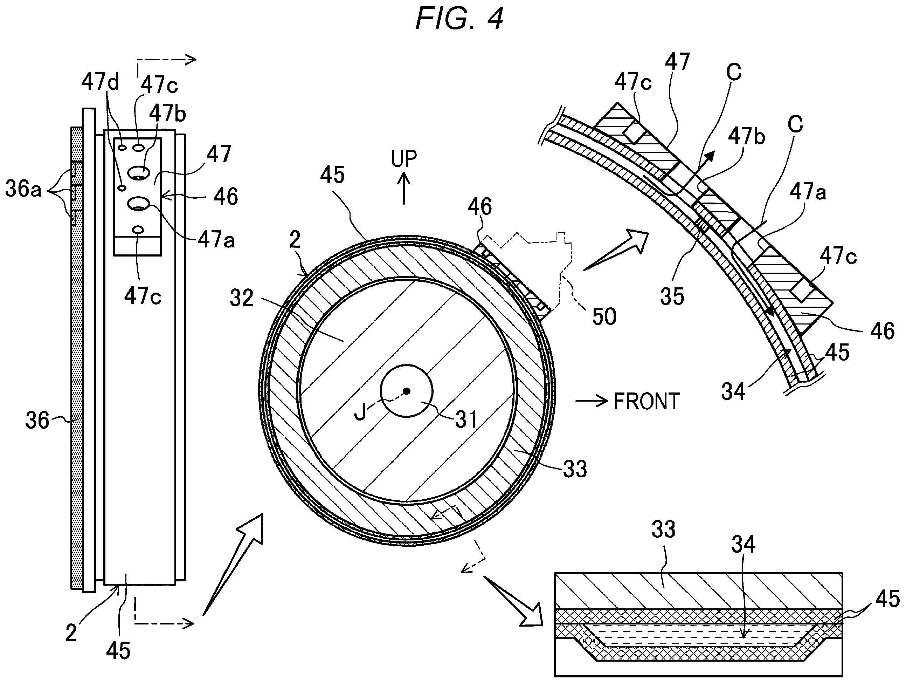

FIG. 2 is a plan view in which the drive unit DU is viewed from above. FIG. 3 is a front view in which the drive unit DU is viewed from the front (in a direction of line III). FIG. 4 illustrates a structure of the motor 2. As illustrated in FIGS. 2 and 3, the drive unit DU is configured by integrally assembling the motor 2, the engine 3, the joint 5, and the transmission 6.

### (Motor)

The motor 2 includes a shaft 31, a rotor 32, a stator 33, a motor block 40, a motor housing 45, and a motor-side terminal block 50.

As illustrated in FIG. 4, the motor 2 is a three-phase permanent magnet synchronous motor, for example. The shaft 31 extends in the axial direction. The rotor 32 is formed of a columnar member that includes a permanent magnet. Although not illustrated, magnetic poles including an N pole and an S pole are alternately provided in an outer circumferential portion of the rotor 32. The shaft 31 and the rotor 32 are coaxially fixed with the rotation axis J being a center.

The stator 33 is formed of a cylindrical member. The stator 33 is arranged coaxially with the rotor 32. An air gap is provided between the rotor 32 and the stator 33. Although not illustrated, the stator 33 includes a steel core, and a three-phase coil group of a U-phase, a V-phase, and a W-phase, each of which is configured by winding a copper wire around the core.

As illustrated in FIGS. 2 and 3, the motor block 40 is formed in a substantially rectangular parallelepiped block shape. In detail, the motor block 40 is formed in a substantially square box shape and has a cavity formed therein.

As will be described in detail below, the motor block 40 is formed by combining a first motor block 150 and a second motor block 160.

The motor housing 45 is formed as a cylindrical metal container that has a circular cross section and extends in the axial direction. The motor housing 45 is accommodated in the motor block 40.

As illustrated in FIG. 4, the shaft 31, the rotor 32, and the stator 33 are accommodated in the motor housing 45. The shaft 31 is rotatably supported by the motor housing 45. The shaft 31 extends horizontally in the vehicle width direction (the left-right direction) in a manner to coincide with the rotation axis J.

As illustrated in FIGS. 2 and 3, a right end portion of the shaft 31 is coupled to a crankshaft of the engine 3 via the joint 5. A left end portion of the shaft 31 is coupled to the transmission 6.

As illustrated in FIG. 4, an outer circumferential surface of the stator 33 is in close contact with an inner circumferential surface of the motor housing 45. During operation of the motor 2, a large current flows through the stator 33. At the time, the stator 33 generates heat due to copper loss and iron loss. In order to cool the stator 33, a stator cooling flow path 34 is formed between the inner circumferential surface of the motor housing 45 and the outer circumferential surface of the stator 33. The stator cooling flow path 34 is a belt-shaped flow path through which a refrigerant C flows, and extends over an entire circumference of the motor housing 45 with a large width.

When viewed in the axial direction, an attachment base 46 is arranged obliquely on an upper front side of the motor housing 45. The attachment base 46 has a flat attachment surface 47 that faces obliquely upward to the front. The attachment base 46 is formed in a rectangular shape that extends in a tangential direction of the motor housing 45. An inlet 47a and an outlet 47b are formed in the attachment surface 47. The inlet 47a and the outlet 47b are adjacent to each other in the circumferential direction. The inlet 47a and the outlet 47b communicate with the stator cooling flow path 34. Two fastening holes 47c and two positioning holes 47d are formed in the attachment surface 47.

A partition wall 35 is provided in a portion of the stator cooling flow path 34 that opposes the attachment base 46. The partition wall 35 is arranged between the inlet 47a and the outlet 47b. The stator cooling flow path 34 is divided by the partition wall 35. The refrigerant C that is introduced into the stator cooling flow path 34 through the inlet 47a flows circumferentially through the stator cooling flow path 34, and is then led out to the outside through the outlet 47b.

The stator 33 is provided with three coil coupling bus bars 36 in a manner to correspond to respective phases of the U-phase, the V-phase, and the W-phase. The coil coupling bus bar 36 has an annular shape or an arcuate shape. The coil coupling bus bar 36 has a plate shape. The coil coupling bus bars 36 are electrically connected to the coil group of the respective phases in the stator 33. A connection piece 36a is provided in a portion of the coil coupling bus bar 36 that opposes the attachment base 46.

The motor-side terminal block 50 will be described below.

The motor 2 is electrically connected to the battery 4 via the inverter 7. As illustrated in FIG. 2, the inverter 7 includes a DC-side connector 61, a smoothing capacitor 62, a control board 63, an inverter case 70, and an inverter-side terminal block 80.

As illustrated in FIG. 2, the DC-side connector 61 includes a positive bus bar 61a and a negative bus bar 61b. The positive bus bar 61a and the negative bus bar 61b are connected to the control board 63 via the smoothing capacitor 62. The DC-side connector 61 is electrically connected to the battery 4 via a cable 8. The smoothing capacitor 62 smooths the electric power.

A power-based semiconductor such as an IGBT or a MOSFET is mounted on the control board 63. The control board 63 includes an inverter circuit. The control board 63 controls the electric power that is input/output to/from the motor 2.

The inverter case 70 accommodates the DC-side connector 61, the smoothing capacitor 62, and the control board 63. The inverter case 70 has a flat shape that has a small thickness in the up-down direction and expands in the front-rear direction and the left-right direction. The inverter case 70 is fastened and attached to an upper portion of the drive unit DU in a manner to be provided across the rotation axis J.

The inverter-side terminal block 80 constitutes an AC-side connector. The inverter-side terminal block 80 holds three inverter-side bus bars 90 that correspond to the respective phases of the U-phase, the V-phase, and the W-phase. The inverter-side bus bar 90 has a plate shape. One end of the inverter-side bus bar 90 is connected to the control board 63. The other end of the inverter-side bus bar 90 is connected to a motor-side bus bar 100 in the motor-side terminal block 50, which will be described below.

The inverter 7 is electrically connected to the motor 2 via the inverter-side terminal block 80 and the motor-side terminal block 50. The electric power from the battery 4 is converted from the DC power into the AC power by the inverter 7 and is then supplied to the motor 2.

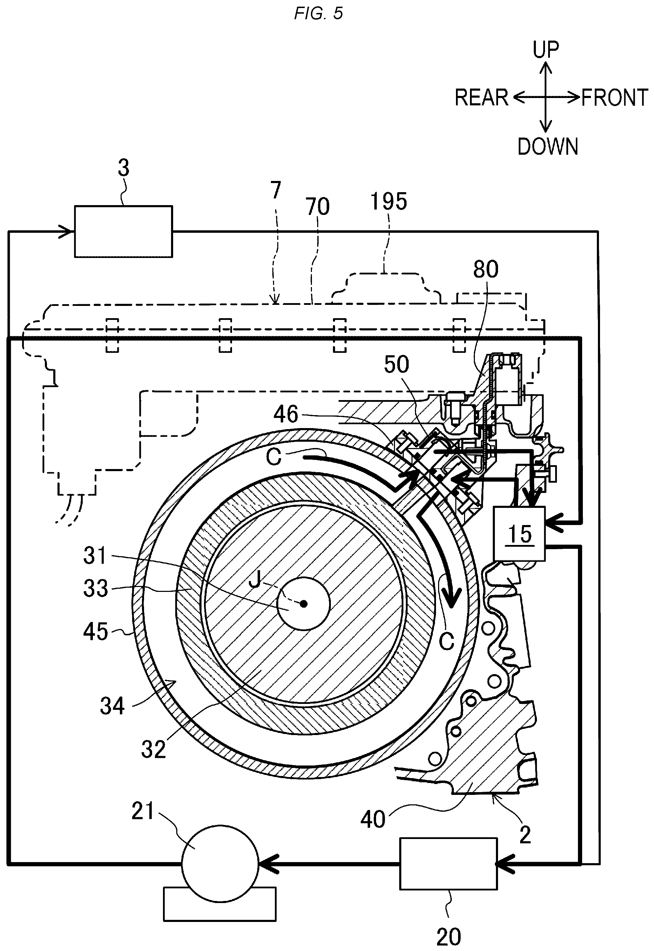

The inverter-side terminal block 80 is arranged in a front portion of an upper surface of the motor block 40. An upper portion of the inverter-side terminal block 80 is located in the inverter case 70, and a lower portion of the inverter-side terminal block 80 is located in the motor block 40 (see FIG. 5). Details of the inverter-side terminal block 80 will be described below.

FIG. 5 is a cross-sectional view of a cooling structure of the motor 2 that is taken along line V. The vehicle 1 includes a circulation system for the refrigerant C. The circulation system is provided mainly for cooling the engine 3. In this example, cooling water for cooling the engine is also used as the refrigerant C. However, the refrigerant C is not limited to water and may be oil or the like, and a type thereof is not limited.

The vehicle 1 includes a heat exchanger 20 and a water pump 21. The heat exchanger 20 is arranged in a front portion of the vehicle 1 and cools the refrigerant C with air. The water pump 21 is operated by the power of the drive unit DU or the electric power. The refrigerant C that has been cooled in the heat exchanger 20 is delivered to the engine 3 and the inverter 7 by the water pump 21.

Although not illustrated, the inverter 7 is provided with a cooling passage for cooling electrical components that are accommodated therein. The refrigerant C that has cooled the inverter 7 flows through a pipe 22 (see FIG. 2) and is introduced into a flow path coupling mechanism 15 that is provided in a front portion of the drive unit DU. Although not illustrated, the flow path coupling mechanism 15 includes a coupling flow path, a joint pipe, and the like.

The refrigerant C that has been introduced into the flow path coupling mechanism 15 is introduced into the stator cooling flow path 34 of the motor 2 via the motor-side terminal block 50. The stator cooling flow path 34 is provided between the stator 33 and the motor housing 45 in the motor 2. The refrigerant C that has been introduced into the stator cooling flow path 34 circulates circumferentially through the stator cooling flow path 34 and exchanges heat with the stator 33. Due to the heat exchange between the refrigerant C and the stator 33, the refrigerant C is heated, and the stator 33 is cooled. The refrigerant C that has circulated through the stator cooling flow path 34 is delivered to the heat exchanger 20 via the flow path coupling mechanism 15. In the heat exchanger 20, the refrigerant C is cooled by performing the heat exchange with outside air.

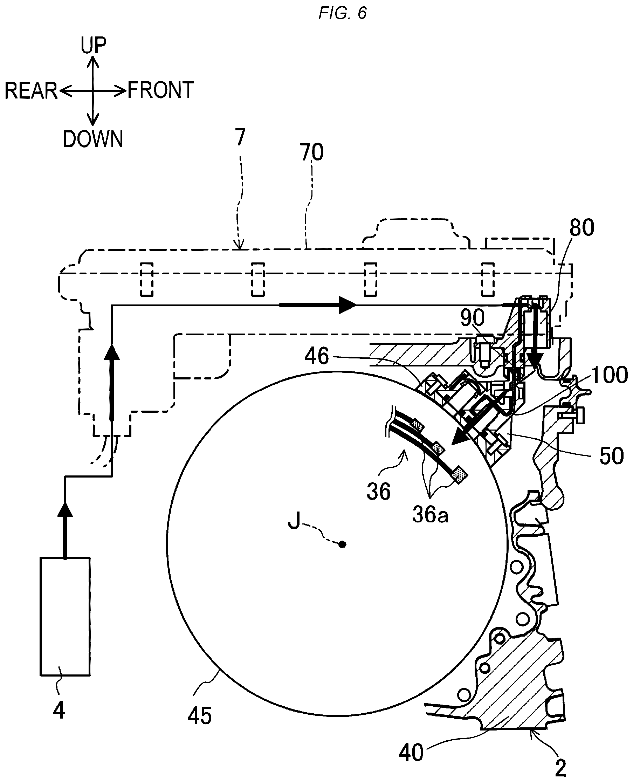

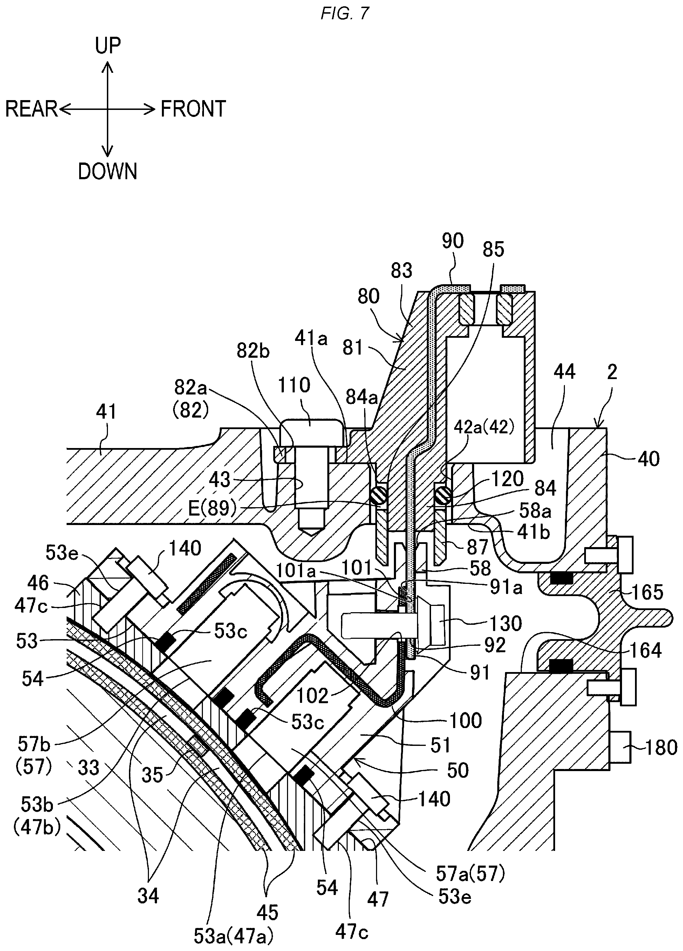

FIG. 6 is a cross-sectional view of an energization structure of the motor 2 and the inverter 7 that is taken along line VI. FIG. 7 illustrates the energization structure between the motor 2 and the inverter 7 in an enlarged manner. As described above, the inverter-side terminal block 80 holds the three inverter-side bus bars 90 that correspond to the respective phases of the U-phase, the V-phase, and the W-phase. Meanwhile, the motor-side terminal block 50 holds the three motor-side bus bars 100 that correspond to the respective phases of the U-phase, the V-phase, and the W-phase. The motor-side bus bar 100 has a plate shape.

One end of the motor-side bus bar 100 in the motor-side terminal block 50 is connected to the other end of the inverter-side bus bar 90 in the inverter-side terminal block 80. The other end of the motor-side bus bar 100 in the motor-side terminal block 50 is connected to the coil coupling bus bar 36 in the stator 33. The motor-side bus bar 100 of the motor-side terminal block 50 and the inverter-side bus bar 90 of the inverter-side terminal block 80 are electrically connected to each other.

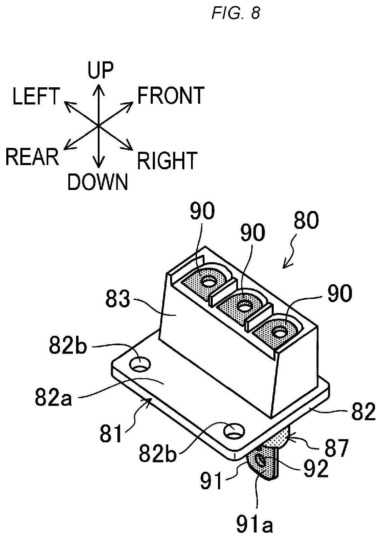

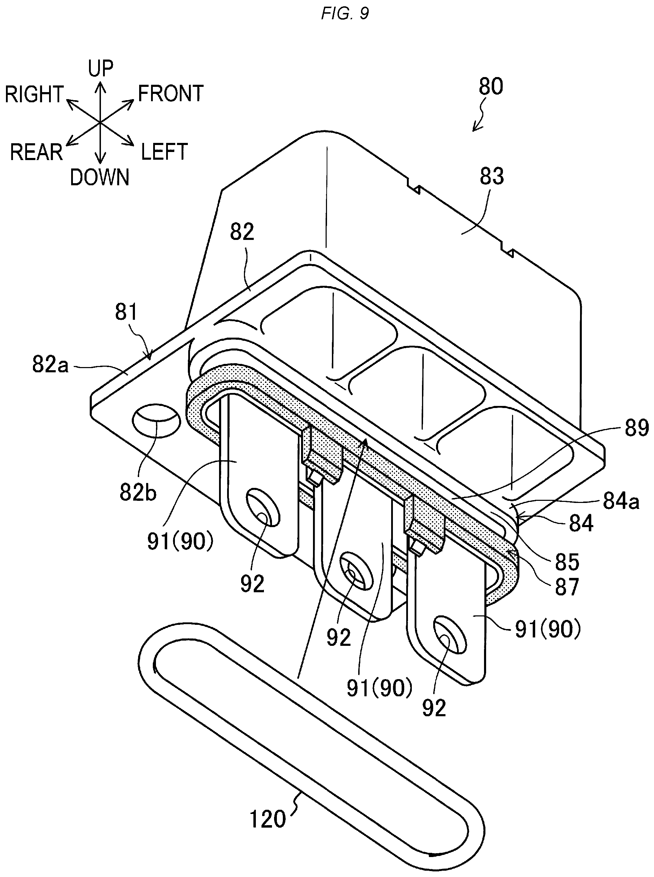

The inverter-side terminal block 80 will be described with reference to FIGS. 7 to 9. FIG. 8 is a perspective view in which the inverter-side terminal block 80 is viewed from above. FIG. 9 is a perspective view in which the inverter-side terminal block 80 is viewed from below.

The inverter-side terminal block 80 is made of a resin. The inverter-side terminal block 80 is formed by injection molding (in detail, molding).

The inverter-side terminal block 80 includes a fixed portion 81, an insertion portion 84, and a separate portion 87. Furthermore, the fixed portion 81 includes a base portion 82 and a vertically extending portion 83. The base portion 82 has a plate shape in which the up-down direction is set as a thickness direction, and extends longitudinally in the left-right direction and shortly in the front-rear direction. The vertically extending portion 83 is provided in a front end portion of an upper surface of the base portion 82. The vertically extending portion 83 is formed in a substantially quadrangular columnar shape that extends in the up-down direction. When seen in the up-down direction, the vertically extending portion 83 is formed to be long in the left-right direction and short in the front-rear direction.

A portion of the base portion 82 that bulges rearward from a lower end portion of the vertically extending portion 83 constitutes a flange 82a. The flange 82a is arranged behind the vertically extending portion 83. The flange 82a is provided with two through holes 82b. The through holes 82b penetrate the flange 82a in the up-down direction. The two through holes 82b are arranged side by side at intervals in the left-right direction. The through holes 82b allow fixtures 110, which will be described below, to pass therethrough in the up-down direction.

The insertion portion 84 is provided in a portion of a lower surface of the base portion 82 of the fixed portion 81, the portion opposing the vertically extending portion 83. The insertion portion 84 is formed in a substantially quadrangular columnar shape. The insertion portion 84 extends in the up-down direction. When seen in the up-down direction, the insertion portion 84 is formed to be long in the left-right direction and short in the front-rear direction. The insertion portion 84 extends downward from the fixed portion 81 toward the motor-side terminal block 50 (see FIG. 7).

A step portion 85 is provided in the outer circumferential surface 84a of the insertion portion 84. The outer circumferential surface 84a faces the front-rear direction and the left-right direction. In the outer circumferential surface 84a of the insertion portion 84, an upper side of the step portion 85 has a large diameter, and a lower side thereof has a small diameter.

The separate portion 87 is formed as a separate body from the insertion portion 84. The separate portion 87 is formed in a substantially quadrangular cylindrical shape. The separate portion 87 extends in the up-down direction. When seen in the up-down direction, the separate portion 87 is formed to be long in the left-right direction and short in the front-rear direction. The separate portion 87 is fitted to the outer circumferential surface 84a of the insertion portion 84 from below. That is, the separate portion 87 is fitted to the outer circumferential surface 84a of the insertion portion 84 from an opposite side to the fixed portion 81 (the motor-side terminal block 50 side). The separate portion 87 constitutes a lower end portion of the inverter-side terminal block 80.

The step portion 85 in the outer circumferential surface 84a of the insertion portion 84 and the separate portion 87 constitute a groove portion 89. An O-ring 120, which will be described below, is arranged in the groove portion 89. The groove portion 89 is formed in a groove shape that extends in the left-right direction and the front-rear direction and makes a circle.

The inverter-side terminal block 80 holds the three inverter-side bus bars 90 that correspond to the respective phases of the U-phase, the V-phase, and the W-phase. The three inverter-side bus bars 90 are arranged side by side in the left-right direction. The inverter-side bus bars 90 are each made of metal. The adjacent inverter-side bus bars 90 are insulated from each other by the resin.

The inverter-side bus bar 90 is bent in an inverted L-shape. The inverter-side bus bar 90 extends rearward, is then curved, and extends downward. A lower end portion of the inverter-side bus bar 90 is an inverter-side terminal 91 that protrudes downward from the lower end portion of the inverter-side terminal block 80 (a lower end portion of the separate portion 87) .

The inverter-side terminal 91 is formed by a lower end portion of the plate-shaped inverter-side bus bar 90. The insertion portion 84 of the inverter-side terminal block 80 holds the inverter-side terminal 91. The inverter-side terminal 91 extends downward toward the motor-side terminal block 50. In detail, the inverter-side terminal 91 protrudes downward from the insertion portion 84 of the inverter-side terminal block 80 toward the motor-side terminal block 50.

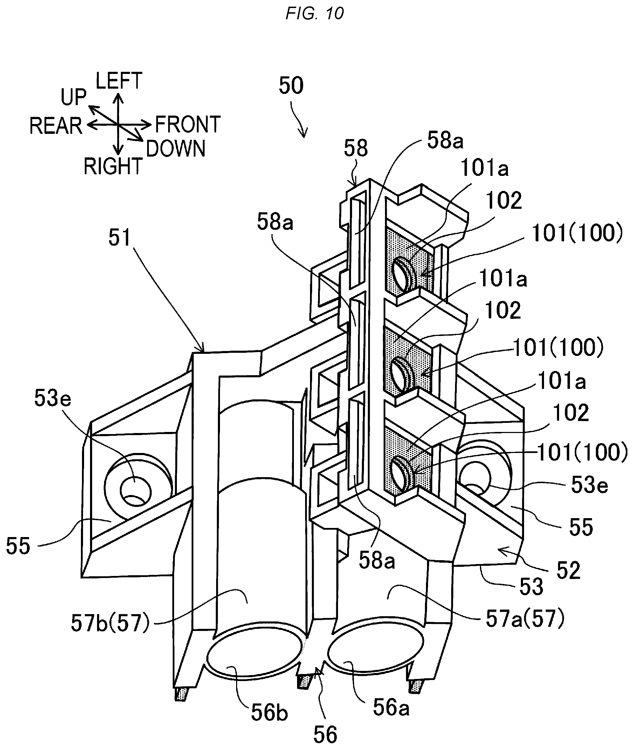

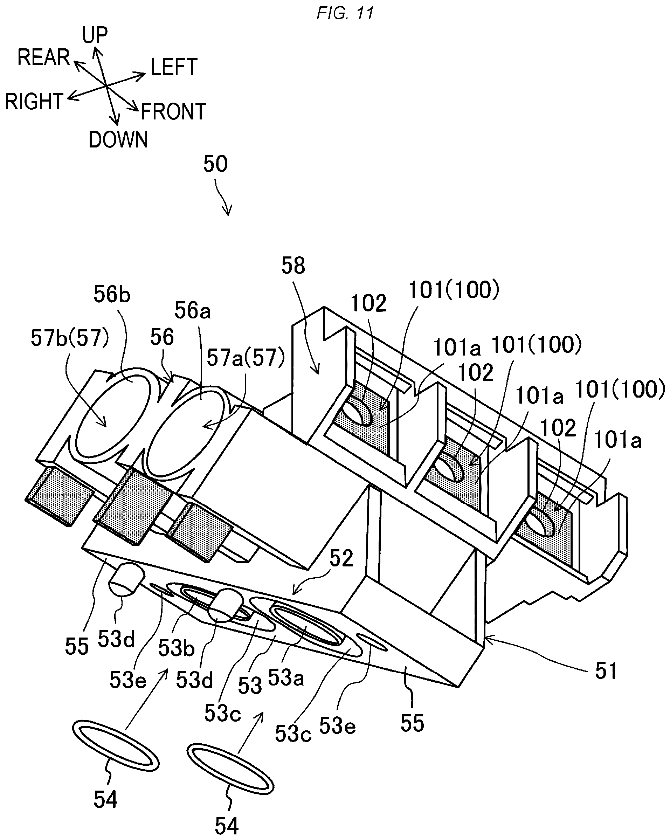

The motor-side terminal block 50 will be described with reference to FIGS. 7, 10, and 11. FIG. 10 is a perspective view in which the motor-side terminal block 50 is viewed from above. FIG. 11 is a perspective view in which the motor-side terminal block 50 is viewed from below.

The motor-side terminal block 50 is manufactured by injection molding (specifically, molding) of the resin. The motor-side terminal block 50 not only has a function to relay the flow of the electric power between the inverter 7 and the motor 2, but also has a function to relay the flow of the refrigerant C between the flow path coupling mechanism 15 and the motor 2. The motor-side terminal block 50 includes a resin structure 51, an attachment portion 52, a connection portion 56, a terminal block side flow path 57, and a guide portion 58.

The resin structure 51 is made of an insulating resin. The resin structure 51 is formed by injection molding of the resin. The resin structure 51 is formed by solidifying the molten insulating resin into a predetermined shape.

In the motor-side terminal block 50, the attachment portion 52 is formed in a lower portion of the resin structure 51. The attachment portion 52 of the motor-side terminal block 50 is attached to the attachment base 46 of the motor housing 45. The attachment portion 52 includes an attachment surface 53.

The attachment surface 53 of the motor-side terminal block 50 faces downward and is joined and attached to the attachment surface 47 of the motor housing 45. On the attachment surface 53 of the motor-side terminal block 50, an outlet 53a and an inlet 53b are opened. The outlet 53a and the inlet 53b in the attachment surface 53 of the motor-side terminal block 50 respectively correspond to the inlet 47a and the outlet 47b in the attachment surface 47 of the motor housing 45, and each communicate with the stator cooling flow path 34.

On the attachment surface 53 of the motor-side terminal block 50, an O-ring groove 53c is provided around each of the outlet 53a and the inlet 53b. The O-ring groove 53c is provided to attach an O-ring 54. The O-ring 54 is provided to prevent liquid leakage.

Two positioning projections 53d are provided to the attachment surface 53 of the motor-side terminal block 50. The two positioning projections 53d on the attachment surface 53 of the motor-side terminal block 50 correspond to the two positioning holes 47d in the attachment surface 47 of the motor housing 45.

In the motor-side terminal block 50, paired flange portions 55, each of which protrudes outward in the front-rear direction, are provided at both end portions in the front-rear direction in a lower portion of the resin structure 51. The flange portion 55 is formed in a plate shape having the up-down direction as a thickness direction. An upper surface of the flange portion 55 is exposed. A lower surface of the flange portion 55 is each end portion of the attachment surface 53 in the front-rear direction.

Two fastening holes 53e are provided to the attachment surface 53 as the lower surface of the flange portion 55. The two fastening holes 53e in the attachment surface 53 of the flange portion 55 of the motor-side terminal block 50 correspond to the two fastening holes 47c in the attachment surface 47 of the motor housing 45. The fastening hole 53e penetrates the flange portion 55 in the up-down direction. A fastener 140 (see FIG. 7) such as a bolt is inserted through the fastening hole 53e.

In the motor-side terminal block 50, the connection portion 56 is formed in a right portion of the resin structure 51. The connection portion 56 of the motor-side terminal block 50 is connected to the flow path coupling mechanism 15. In the connection portion 56 of the motor-side terminal block 50, an inflow port 56a and an outflow port 56b are opened. The inflow port 56a and the outflow port 56b in the connection portion 56 of the motor-side terminal block 50 communicate with the flow path coupling mechanism 15. At the inflow port 56a, the refrigerant C flows from the flow path coupling mechanism 15 into the motor-side terminal block 50. At the outflow port 56b, the refrigerant C flows out from the motor-side terminal block 50 to the flow path coupling mechanism 15.

The terminal block side flow path 57 is an example of the flow path. The terminal block side flow path 57 is a cavity that is provided in the resin structure 51 of the motor-side terminal block 50. The refrigerant C flows through the terminal block side flow path 57. The refrigerant C is provided to cool the stator 33 of the motor 2 (and the motor-side bus bar 100 of the motor-side terminal block 50).

The terminal block side flow path 57 includes a first terminal block side flow path 57a and a second terminal block side flow path 57b. The first terminal block side flow path 57a includes the inflow port 56a and the outlet 53a. The second terminal block side flow path 57b includes the outflow port 56b and the inlet 53b. The refrigerant C flows from the flow path coupling mechanism 15 to the stator cooling flow path 34 through the first terminal block side flow path 57a of the motor-side terminal block 50. The refrigerant C flows from the stator cooling flow path 34 to the flow path coupling mechanism 15 through the second terminal block side flow path 57b of the motor-side terminal block 50.

In the motor-side terminal block 50, the guide portion 58 is provided in an upper portion of the resin structure 51. The guide portion 58 is formed in a substantially quadrangular columnar shape. The guide portion 58 extends in the up-down direction. When seen in the up-down direction, the guide portion 58 is formed to be long in the left-right direction and short in the front-rear direction. An upper end portion of the guide portion 58 constitutes an upper end portion of the resin structure 51 of the motor-side terminal block 50. In the upper end portion of the guide portion 58 of the motor-side terminal block 50, a guide surface 58a that is inclined to extend forward or rearward to the above is provided.

The resin structure 51 of the motor-side terminal block 50 holds the three motor-side bus bars 100 that correspond to the respective phases of the U-phase, the V-phase, and the W-phase. The motor-side bus bar 100 is embedded in the resin structure 51 of the motor-side terminal block 50. The motor-side bus bar 100 is made of metal. The adjacent motor-side bus bars 100 are insulated from each other by the resin structure 51 that is made of the resin.

In particular, the guide portion 58 of the motor-side terminal block 50 holds the three motor-side bus bars 100 in a manner to be aligned in the left-right direction and extend in the up-down direction. The guide portion 58 covers an upper end portion of the motor-side bus bar 100 from the rear side, the left side, and the right side. The guide portion 58 does not cover the upper end portion of the motor-side bus bar 100 from the front side. The upper end portion of the motor-side bus bar 100 is a motor-side terminal 101 that is exposed forward in the guide portion 58 of the motor-side terminal block 50.

The motor-side terminal 101 is formed by the upper end portion of the plate-shaped motor-side bus bar 100. The guide portion 58 of the motor-side terminal block 50 holds the motor-side terminal 101. The motor-side terminal 101 extends upward toward the insertion portion 84 of the inverter-side terminal block 80. The inverter-side terminal 91 extends downward toward the guide portion 58 of the motor-side terminal block 50. In detail, the inverter-side terminal 91 protrudes downward from the insertion portion 84 of the inverter-side terminal block 80 toward the guide portion 58 of the motor-side terminal block 50.

### (Fixing of Inverter-Side Terminal Block to Motor Block)

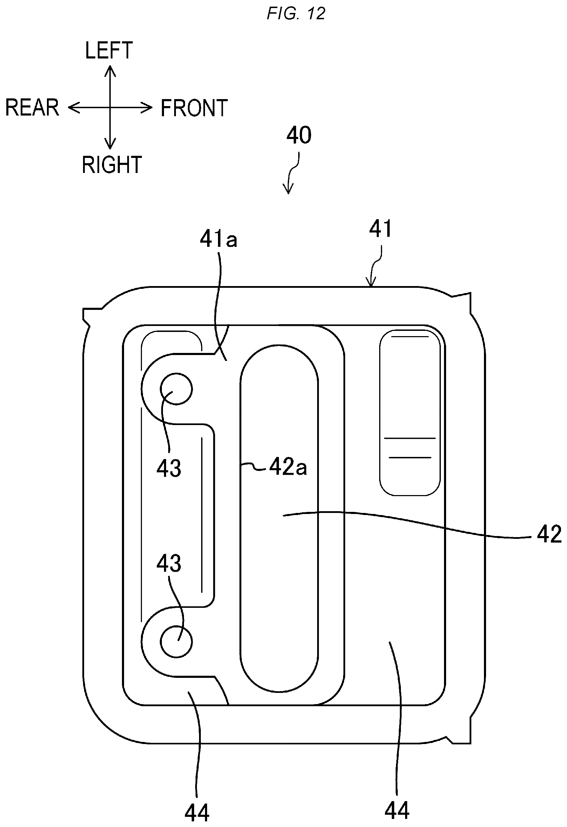

A description will be made on fixing of the inverter-side terminal block 80 to the motor block 40 with reference to FIGS. 7 and 12. FIG. 12 is a plan view in which a fixing surface 41a of the motor block 40 is viewed from above.

The inverter-side terminal block 80 is fixed to the motor block 40 of the motor 2. As described above, the motor block 40 has the substantially square box shape and has the cavity formed therein. The motor housing 45 (that accommodates the shaft 31, the rotor 32, and the stator 33) is accommodated in the motor block 40.

An upper wall portion 41 of the motor block 40 is provided with the fixing surface 41a. The upper wall portion 41 has a plate shape having a thickness in the up-down direction. The upper wall portion 41 extends in the front-rear direction and the left-right direction. The fixing surface 41a faces upward.

The fixing surface 41a of the upper wall portion 41 of the motor block 40 is provided with an insertion hole 42, two fixing holes 43, and a thinned portion 44. The insertion hole 42 penetrates the upper wall portion 41 in the up-down direction. When seen in the up-down direction, the insertion hole 42 is formed to be long in the left-right direction and short in the front-rear direction.

The two fixing holes 43 are arranged side by side at intervals in the left-right direction on the rear side of the insertion hole 42. The fixing hole 43 is, for example, a bolt hole and corresponds to the fixture 110, which will be described below.

The thinned portion 44 is provided around the insertion hole 42 in the fixing surface 41a of the motor block 40. The thinned portion 44 is arranged on the front side and the rear side of the insertion hole 42. The thinned portion 44 is formed as a concave portion, and is recessed downward from the fixing surface 41a.

The flange 82a of the fixed portion 81 of the inverter-side terminal block 80 is fixed to the fixing surface 41a of the motor block 40 in the motor 2 by the fixture 110.

The fixture 110 is, for example, a bolt. The fixture 110 penetrates the through hole 82b of the flange 82a in the fixed portion 81 in the up-down direction, and is bolted to the fixing hole 43 in the fixing surface 41a.

### (Insertion of Insertion Portion in Insertion Hole)

The insertion of the insertion portion 84 of the inverter-side terminal block 80 into the insertion hole 42 of the motor block 40 will be described with reference to FIG. 7. The insertion portion 84 of the inverter-side terminal block 80 is inserted in the insertion hole 42 provided in the fixing surface 41a of the motor block 40. A lower end portion of the insertion portion 84 protrudes slightly downward from a back surface 41b (a surface facing downward on the opposite side to the fixing surface 41a) of the upper wall portion 41 of the motor block 40. An insertion direction of the insertion portion 84 in the insertion hole 42 is the up-down direction.

The O-ring 120 is provided in a clearance E between the outer circumferential surface 84a of the insertion portion 84 of the inverter-side terminal block 80 and an inner circumferential surface 42a of the insertion hole 42 of the motor block 40. The O-ring 120 is formed of an elastic body. The O-ring 120 is made of rubber, for example. The O-ring 120 suppresses leakage of oil or the like from the inside of the motor block 40 to the outside of the motor block 40. The O-ring 120 is arranged to surround the outer circumferential surface 84a of the insertion portion 84 as a shaft around the axis. The O-ring 120 constitutes a shaft seal.

In the outer circumferential surface 84a of the insertion portion 84, an upper portion (a portion on the fixed portion 81 side) of the stepped portion 85 has a large diameter and a lower portion (a portion on the motor-side terminal block 50 side) thereof has a small diameter. In the inverter-side terminal block 80, the separate portion 87 is fitted to the outer circumferential surface 84a of the insertion portion 84 from the lower side (the motor-side terminal block 50 side). The step portion 85 is provided in the outer circumferential surface 84a of the insertion portion 84.

The step portion 85 in the outer circumferential surface 84a of the insertion portion 84 and the separate portion 87 constitute the groove portion 89. The groove portion 89 faces the inner circumferential surface 42a of the insertion hole 42. The O-ring 120 is arranged in the groove portion 89.

### (Connection Between Motor-Side Terminal and Inverter-Side Terminal)

Connection between the motor-side terminal 101 and the inverter-side terminal 91 will be described with reference to FIGS. 7, 8, and 10. The motor-side terminal 101 has a plate shape whose thickness direction is the front-rear direction. A front surface of the motor-side terminal 101 is a motor-side connection surface 101a. The motor-side connection surface 101a faces forward. The motor-side terminal 101 is provided with a motor-side fastening hole 102 that penetrates in the front-rear direction.

The inverter-side terminal 91 has a plate shape whose thickness direction is the front-rear direction. A rear surface of the inverter-side terminal 91 is an inverter-side connection surface 91a. The inverter-side connection surface 91a faces rearward. The inverter-side terminal 91 is provided with an inverter-side fastening hole 92 that penetrates in the front-rear direction.

The motor-side connection surface 101a of the motor-side terminal 101 and the inverter-side connection surface 91a of the inverter-side terminal 91 extend parallel to each other in the insertion direction (the up-down direction). The motor-side connection surface 101a of the motor-side terminal 101 and the inverter-side connection surface 91a of the inverter-side terminal 91 overlap each other in the insertion direction (the up-down direction).

The motor-side terminal 101 and the inverter-side terminal 91 are connected to each other by being fastened by a fastener 130. The fastening direction by the fastener 130 is the front-rear direction. The fastener 130 is, for example, a bolt.

As described above, the motor 2 is mounted on the vehicle 1. The motor 2 includes the motor-side terminal block 50 and the motor block 40. The motor-side terminal block 50 is an example of the terminal block. The motor block 40 is an example of the casing.

The resin structure 51 of the motor-side terminal block 50 is made of the resin. The motor-side terminal block 50 holds the motor-side terminal 101. The motor-side terminal 101 is an example of the terminal. The motor-side terminal 101 that is formed by the motor-side bus bar 100 is electrically connected to the connection piece 36a of the coil coupling bus bar 36 in the stator 33. The motor-side terminal block 50 has the terminal block side flow path 57. The terminal block side flow path 57 is an example of the flow path. The refrigerant C flows through the terminal block side flow path 57. The refrigerant C is provided to cool the stator 33 of the motor 2 (and the motor-side bus bar 100 of the motor-side terminal block 50).

The motor block 40 is formed in a substantially rectangular parallelepiped block shape. In detail, the motor block 40 is formed in a substantially square box shape and has a cavity formed therein. The cylindrical motor housing 45 (that accommodates the shaft 31, the rotor 32, and the stator 33) is accommodated in the motor block 40. The attachment surface 53 of the motor-side terminal block 50 is attached to the front and upper attachment surface 47 of the motor housing 45. That is, the motor-side terminal block 50 (attached to the motor housing 45) is accommodated in the motor block 40. The motor block 40 accommodates the stator 33 and the motor-side terminal block 50 therein.

The motor block 40 is formed by combining the first motor block 150 and the second motor block 160. The first motor block 150 is an example of the first casing. The second motor block 160 is an example of the second casing.

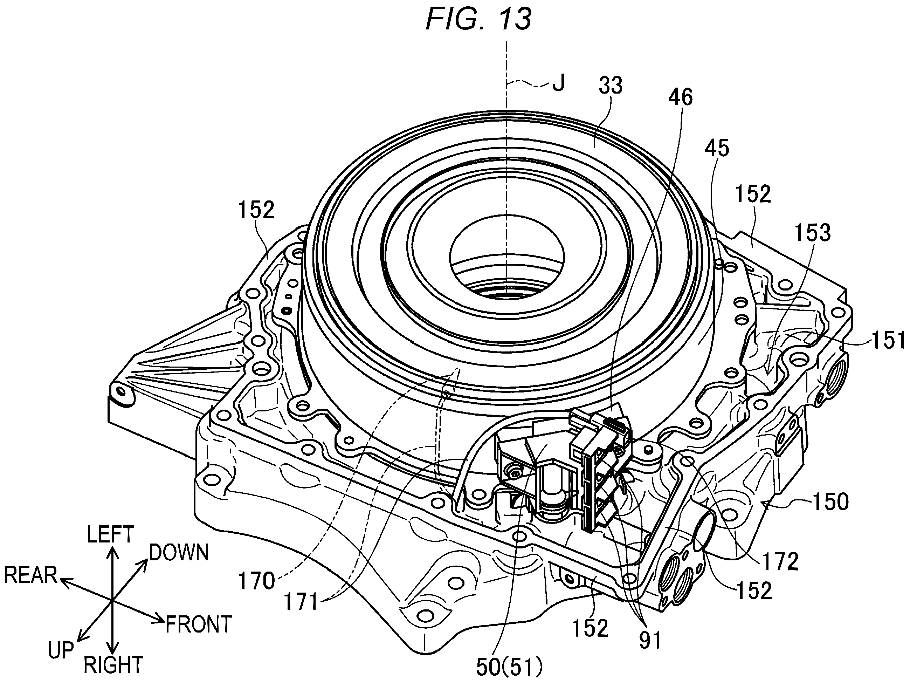

The combination of the motor block 40 will be described with reference to FIGS. 13 to 16. The motor block 40 illustrated in FIGS. 13 to 16 has a common basic structure but has a slightly different detailed structure when compared to the motor block 40 illustrated in FIGS. 2 to 12. More specifically, a thermometer 170, a thermometer wire 171, a thermometer connector 172, an external connector wire 181, a relay connector 182, a rotational position detection sensor 183, a rotational position detection sensor wire 184, and a bracket 185, which will be described below, are not illustrated in FIGS. 2 to 12, but are illustrated in FIGS. 13 to 16. FIG. 7 schematically illustrates an external connector 180, which will be described below. In the description of the motor block 40 illustrated in FIGS. 13 to 16, the portions that are common to the motor block 40 illustrated in FIGS. 2 to 12 are denoted by the same reference signs, and the detailed description thereon will not be made.

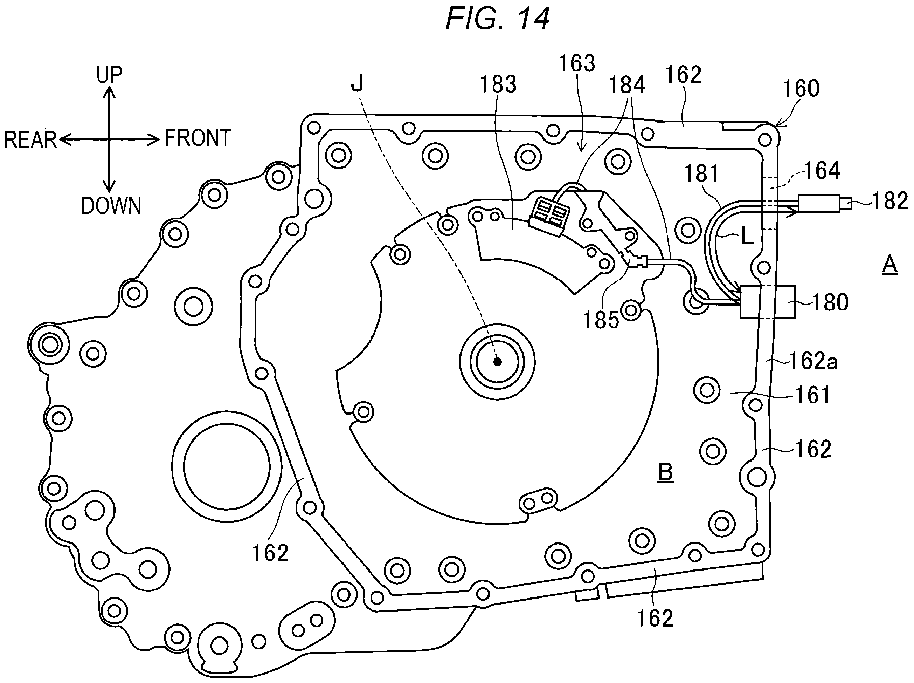

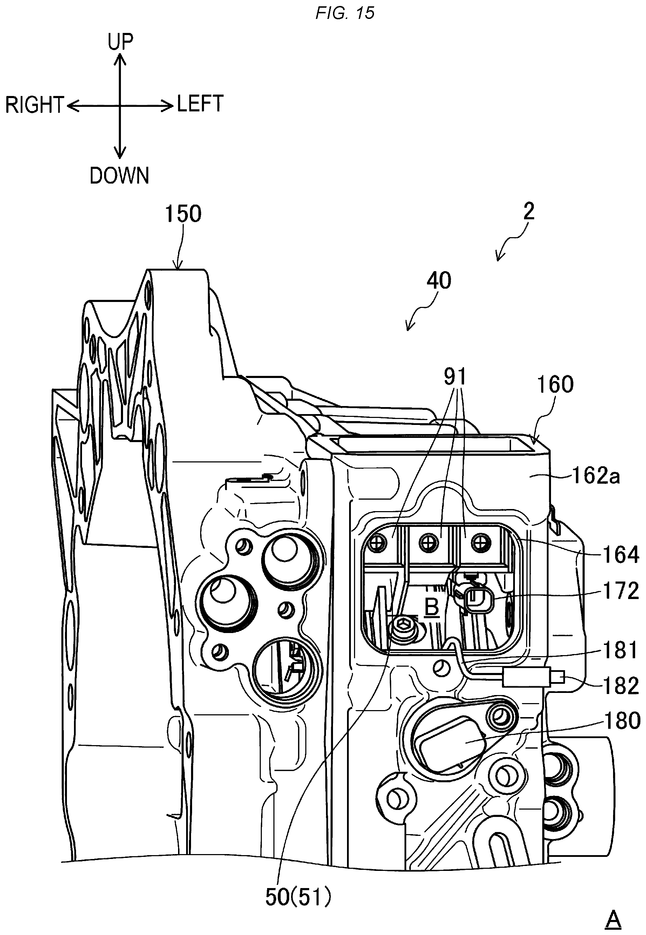

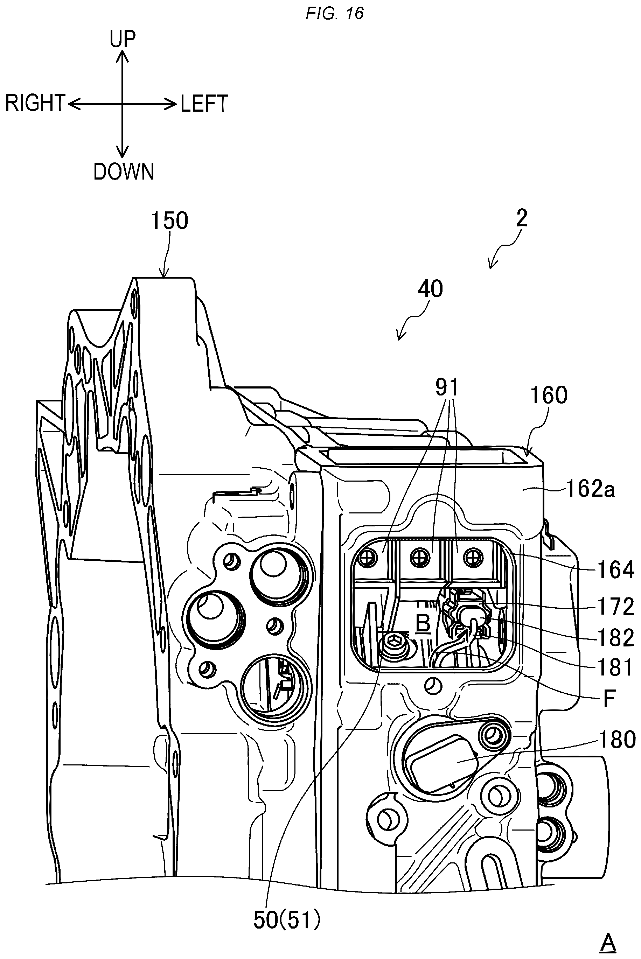

FIG. 13 is a perspective view of the first motor block 150. FIG. 14 is a perspective view of the second motor block 160. FIG. 15 illustrates a combination of the first motor block 150 and the second motor block 160. FIG. 16 illustrates connection between the thermometer connector 172 and the relay connector 182.

The first motor block 150 constitutes a right portion of the motor block 40. The first motor block 150 has such a shape that the motor block 40 in the substantially square box shape is divided in half in the left-right direction. The first motor block 150 includes a first bottom wall portion 151 and a first side wall portion 152. The first bottom wall portion 151 has a plate shape whose thickness direction is the left-right direction. When viewed in the left-right direction, the first bottom wall portion 151 has a substantially quadrangular shape that extends in the substantially same length in the front-rear direction and the up-down direction.

The first side wall portion 152 extends leftward from edge portions (four sides) of the first bottom wall portion 151. The first side wall portion 152 has a plate shape whose thickness direction is the front-rear direction or the up-down direction. The first side wall portion 152 has a substantially quadrangular shape that is long in the up-down direction or the front-rear direction and short in the left-right direction.

A space that is surrounded by the first bottom wall portion 151 and the first side wall portion 152 in the first motor block 150 is referred to as a first space 153.

The first motor block 150 holds the motor housing 45 (accommodating the shaft 31, the rotor 32, and the stator 33), the motor-side terminal block 50 (attached to the motor housing 45), the thermometer 170, the thermometer wire 171, and the thermometer connector 172.

The motor housing 45 is fixed to the first bottom wall portion 151 of the first motor block 150. A portion on the right side of the motor housing 45 is accommodated in the first space 153 of the first motor block 150. Most of a left portion of the motor housing 45 protrudes leftward (to the outside of the first space 153) from a left end portion of the first side wall portion 152 of the first motor block 150.

The motor-side terminal block 50 is attached to a front and upper portion of the motor housing 45. A right portion of the motor-side terminal block 50 is accommodated in the first space 153 of the first motor block 150. Most of the left side of the motor-side terminal block 50 protrudes leftward (to the outside of the first space 153) from a left end portion of the first side wall portion 152 of the first motor block 150.

The thermometer 170 is an example of the first sensor. The thermometer 170 includes a thermistor, for example. The thermistor measures a temperature by using a change in a resistance value at the time of sensing heat. A detection portion of the thermometer 170 is arranged between the coils in the stator 33 (accommodated in the motor housing 45).

The thermometer wire 171 is an example of the first wire. The thermometer wire 171 extends from the thermometer 170. The thermometer wire 171 includes a metal conductor and a coating material that covers the conductor and is made of the resin, for example. One end portion of the thermometer wire 171 is connected to the thermometer 170.

The thermometer connector 172 is an example of the first connector. The thermometer connector 172 is provided in the other end portion of the thermometer wire 171. The thermometer connector 172 is arranged between the motor housing 45 and the motor-side terminal block 50. The thermometer connector 172 is a concave connector. The thermometer connector 172 faces forward.

The thermometer wire 171 extends such that the thermometer connector 172 is arranged on an opposite side of the resin structure 51 of the motor-side terminal block 50 from the motor-side terminal 101.

The second motor block 160 constitutes a left portion of the motor block 40. The second motor block 160 has such a shape in which the motor block 40 in the substantially square box shape is divided in half in the left-right direction. The second motor block 160 includes a second bottom wall portion 161 and a second side wall portion 162.

The second bottom wall portion 161 has a plate shape whose thickness direction is the left-right direction. When viewed in the left-right direction, the second bottom wall portion 161 has a substantially quadrangular shape that extends in the substantially same length in the front-rear direction and the up-down direction.

The second side wall portion 162 extends rightward from an edge portion (four sides) of the second bottom wall portion 161. The second side wall portion 162 has a plate shape whose thickness direction is the front-rear direction or the up-down direction. The second side wall portion 162 has a substantially quadrangular shape that is long in the up-down direction or the front-rear direction and short in the left-right direction.

A space that is surrounded by the second bottom wall portion 161 and the second side wall portion 162 in the second motor block 160 is referred to as a second space 163.

The second motor block 160 has a service hole 164. The service hole 164 is provided in a front wall portion 162a of the second side wall portion 162 in the second motor block 160. The front wall portion 162a has a plate shape having a thickness in the front-rear direction. The service hole 164 penetrates the front wall portion 162a in the front-rear direction.

When the first motor block 150 and the second motor block 160 are combined to constitute the motor block 40, most of the left portion of the motor housing 45 is accommodated in the second space 163 of the second motor block 160. When the first motor block 150 and the second motor block 160 are combined to constitute the motor block 40, most of a left portion of the motor-side terminal block 50 is accommodated in the second space 163 of the second motor block 160.

The service hole 164 is provided to face the motor-side terminal block 50 from outside A of the motor block 40 when the first motor block 150 and the second motor block 160 are combined to constitute the motor block 40. A worker on the outside A of the motor block 40 can see the motor-side terminal 101 of the motor-side terminal block 50 on inside B of the motor block 40, via the service hole 164.

The worker puts his/her hand on the inside B of the motor block 40 from the outside A of the motor block 40 via the service hole 164, and performs connection work of the motor-side terminal 101 in the motor-side terminal block 50. After completion of the work, the service hole 164 is covered with a lid 165 (see FIG. 7).

The second motor block 160 holds the external connector 180, the external connector wire 181, the relay connector 182, the rotational position detection sensor 183, and the rotational position detection sensor wire 184.

The external connector 180 is fixed to the front wall portion 162a of the second motor block 160. In detail, the external connector 180 penetrates the front wall portion 162a in the front-rear direction. The external connector 180 is exposed to the outside A of the motor block 40. The external connector 180 is arranged below the service hole 164 in the front wall portion 162a, and is attached to the second motor block 160 from the outside by an attachment member such as a bolt.

The external connector 180 is supplied with electric power F from the outside A of the motor block 40. A supply source of the electric power F is, for example, the battery 4 or a 12-V low-voltage battery (not illustrated). A voltage of the electric power F may be transformed or the like by the inverter 7, a converter, or the like before reaching the external connector 180 from the battery 4 or the like.

In the present embodiment, the external connector 180 is electrically connected to the control board 63 that is installed in the inverter 7, via a wire harness 190 illustrated in FIG. 1 and an inverter connection connector 195 that is provided on an outer surface of the inverter 7 as illustrated in FIG. 5. The control board 63 may be provided at a different position from the inverter 7.

The wire harness 190 can be connected to the external connector 180 (exposed to the outside A of the motor block 40) from the outside A of the motor block 40.

The external connector wire 181 is an example of the second wire. The external connector wire 181 extends from the external connector 180. The external connector wire 181 includes a metal conductor and a coating material that covers the conductor and is made of the resin, for example. One end portion of the external connector wire 181 is connected to the external connector 180.

The relay connector 182 is an example of the second connector. The relay connector 182 is provided in the other end portion of the external connector wire 181. The relay connector 182 is a convex connector.

The thermometer connector 172 and the relay connector 182 are connectable to each other. The thermometer connector 172 and the relay connector 182 are connected to each other by being engaged with each other.

The external connector wire 181 has a length L that allows the relay connector 182 to extend to the outside A of the second motor block 160 via the service hole 164. In fact, the external connector wire 181 starts from the external connector 180, extends slightly on the inside B of the second motor block 160, and then turns back to the outside A of the second motor block 160 via the service hole 164. The relay connector 182 is arranged on the outside A of the second motor block 160.

The rotational position detection sensor 183 is an example of the second sensor. The rotational position detection sensor 183 detects rotational positions (rotation angles) of rotating bodies (the shaft 31 and the rotor 32) of the motor 2. The rotational position detection sensor 183 is a resolver, for example.

The resolver is one that is well-known, excites an AC magnetic field with an excitation coil with respect to a resolver core that rotates synchronously with the rotor, detects an electromotive force caused by the AC magnetic field by a detection coil that is fixed to the casing side near the resolver core, and thereby measures the rotation angles, and thus a detailed description will not be made. In the present embodiment, the resolver is electrically connected to the control board 63 and is supplied with the electric power that excites the AC magnetic field. In addition, the resolver outputs the measured rotation angle as an analog signal or as a digital signal to the electrically connected control board 63. The rotational position detection sensor 183 is fixed to the second bottom wall portion 161 of the second motor block 160.

The rotational position detection sensor wire 184 is an example of the third wire. The rotational position detection sensor wire 184 connects the external connector 180 and the rotational position detection sensor 183. In other words, the rotational position detection sensor 183 is connected to the external connector 180 via the rotational position detection sensor wire 184. The rotational position detection sensor wire 184 is arranged on the inside B of the second motor block 160. The rotational position detection sensor wire 184 is held by the bracket 185 on the way. The rotational position detection sensor wire 184 includes a metal conductor and a coating material that covers the conductor and is made of the resin, for example.

The thermometer connector 172 is arranged at a position that can be seen from the outside A of the motor block 40 via the service hole 164 when the first motor block 150 and the second motor block 160 are combined to constitute the motor block 40. The worker on the outside A of the motor block 40 can see the thermometer connector 172 on the inside B of the motor block 40 via the service hole 164.

The external connector wire 181 extends such that the relay connector 182 is located below the motor-side terminal 101 when the first motor block 150 and the second motor block 160 are combined to constitute the motor block 40.

The electric power F is supplied to the thermometer 170 via the external connector 180, the external connector wire 181, the relay connector 182, the thermometer connector 172, and the thermometer wire 171. Consequently, the thermometer 170 is operated. A signal on the temperature detected by the thermometer 170 is output from the external connector 180 to the control board 63 via the wire harness 190.

The electric power F is supplied to the rotational position detection sensor 183 via the external connector 180 and the rotational position detection sensor wire 184. Consequently, the rotational position detection sensor 183 is operated. A rotational position signal that is detected by the rotational position detection sensor 183 is output from the external connector 180 to the control board 63 as a controller of the motor 2 via the wire harness 190.

### (Manufacturing Method)

A manufacturing method of the motor 2 will be described in FIGS. 13 to 16. This manufacturing method is a method for manufacturing the motor 2. This manufacturing method includes: a preparation step (FIGS. 13 and 14) of preparing the first motor block 150 (the first casing) (that holds the motor-side terminal block 50, the thermometer 170 (the first sensor), the thermometer wire 171 (the first wire) extending from the thermometer 170 (the first sensor), and the thermometer connector 172 (the first connector) provided in the thermometer wire 171 (the first wire)) and the second motor block 160 (the second casing) (that holds the external connector 180, the external connector wire 181 (the second wire) extending from the external connector 180, and the relay connector 182 (the second connector) provided in the external connector wire 181 (the second wire)); a take-out step (FIG. 14) of taking out the relay connector 182 to the outside A of the second motor block 160 via the service hole 164; an assembly step (FIG. 15) of combining the first motor block 150 and the second motor block 160 to constitute the motor block 40; and a connection step (FIG. 16) of connecting the thermometer connector 172 and the relay connector 182 by using the service hole 164.

The motor block 40 is formed by combining the first motor block 150 and the second motor block 160.

At this time, the worker on the outside A of the motor block 40 can perform the connection work of the motor-side terminal 101 in the motor-side terminal block 50 (more specifically, the connection work between the motor-side terminal 101 and the inverter-side terminal 91) by using the service hole 164.

Furthermore, the worker on the outside A of the motor block 40 can connect the relay connector 182 to the thermometer connector 172 by using the common service hole 164.

In this way, the second motor block 160 can be provided with the external connector 180 in the manner to be exposed to the outside A while the thermometer 170 is provided to the first motor block 150 in advance without adding a service hole for connecting the connector of the sensor wire. In addition, the connection work between the motor-side terminal 101 and the inverter-side terminal 91 and the connection work between the thermometer connector 172 and the relay connector 182 can be performed simultaneously. It is possible to improve assembly work efficiency and improve a degree of freedom in design of the motor 2.

In addition, the supply of the electric power F from the outside A of the motor block 40 is required to operate the thermometer 170, the electric power F can be supplied from the outside A of the motor block 40 to the thermometer 170 via the external connector 180, the external connector wire 181, the relay connector 182, the thermometer connector 172, and the thermometer wire 171. In this way, the thermometer 170 can be operated without performing separate connection work for providing a power line.

As it has been described so far, in the motor 2, it is possible to efficiently perform both the connection work of the motor-side terminal 101 in the motor-side terminal block 50 and the connection work between the thermometer connector 172 and the relay connector 182 for operating the thermometer 170 by using the common service hole 164 that is provided in the motor block 40.

In the state where the relay connector 182 is taken out to the outside A of the second motor block 160 via the service hole 164, the first motor block 150 and the second motor block 160 are combined to constitute the motor block 40.

At this time, since the relay connector 182 is located on the outside A of the motor block 40, it is possible to prevent the external connector wire 181 and the relay connector 182 from being sandwiched between the first motor block 150 and the second motor block 160 or interfering with the structure (for example, the motor-side terminal 101 or the like) on the inside B of the motor block 40, without separately providing a portion and a jig for temporarily holding the external connector wire 181 and the relay connector 182. The first motor block 150 and the second motor block 160 can be combined easily.

In addition, the worker on the outside A of the motor block 40 can easily grasp the relay connector 182. The connection work between the thermometer connector 172 and the relay connector 182 by using the service hole 164 can be performed easily.

The single external connector 180 can provide functions to supply the electric power F and transmit a signal for operating both the thermometer 170 and the rotational position detection sensor 183.

Since the thermometer connector 172 is arranged on the opposite side of the motor-side terminal block 50 from the motor-side terminal 101, it is possible to suppress the thermometer connector 172 from contacting the motor-side terminal 101 and being short-circuited.

Unless the relay connector 182 moves upward against a gravitational force, the relay connector 182 does not contact the motor-side terminal 101. It is possible to suppress the relay connector 182 from contacting the motor-side terminal 101 and being short-circuited.

The temperature of the stator 33 of the motor 2 can be measured by the thermometer 170.

The rotational positions of the rotating bodies (the shaft 31 and the rotor 32) of the motor 2 can be detected by the rotational position detection sensor 183.

The motor-side terminal 101 that is held by the motor-side terminal block 50 can be cooled by the refrigerant C that flows through the terminal block side flow path 57.

It is possible to improve production efficiency of the vehicle 1 equipped with the motor 2.

The present disclosure has been described so far in the preferred embodiment. However, such description is not limiting, and various modifications, replacements, or combinations can be made.

The external connector 180 is not limited to the connector capable of supplying the electric power. The external connector 180 may be, for example, a connector for communication (for signal exchange).

The first sensor and the second sensor are not limited to the exemplified sensors, and various forms of sensors can be applied. The second sensor that is held by the second casing may not be provided. In addition, the rotational position detection sensor may be a rotary encoder.

The second connector may be arranged in the second casing.

The rotary electric machine may not be applied to the vehicle 1.

### [Industrial Applicability]

Since the present disclosure can be applied to the rotary electric machine, it is extremely useful and has high industrial applicability.

### Reference Signs List:

A: outside
B: inside
F: electric power
L: length
E: clearance
DU: drive unit
J: rotation axis
C: refrigerant
1: vehicle
1a: front compartment
1b: front wheel
2: motor (rotary electric machine)
3: engine
4: battery
5: joint
6: transmission
7: inverter
8: cable
15: flow path coupling mechanism
20: heat exchanger
21: water pump
22: pipe
31: shaft
32: rotor
33: stator
34: stator cooling flow path
35: partition wall
36: coil coupling bus bar
36a: connection piece
40: motor block (casing)
41: upper wall portion
41a: fixing surface
41b: back surface
42: insertion hole
42a: inner circumferential surface
43: fixing hole
44: thinned portion
45: motor housing
46: attachment base
47: attachment surface
47a: inlet
47b: outlet
47c: fastening hole
47d: positioning hole
50: motor-side terminal block (terminal block)
51: resin structure
52: attachment portion
53: attachment surface
53a: outlet
53b: inlet
53c: O-ring groove
53d: positioning projection
53e: fastening hole
54: O-ring
55: flange portion
56: connection portion
56a: inflow port
56b: outflow port
57: terminal block side flow path (flow path)
57a: first terminal block side flow path
57b: second terminal block side flow path
58: guide portion
58a: guide surface
61: DC-side connector
61a: positive bus bar
61b: negative bus bar
62: smoothing capacitor
63: control board
70: inverter case
80: inverter-side terminal block
81: fixed portion
82: base portion
82a: flange
82b: through hole
83: vertically extending portion
84: insertion portion
84a: outer circumferential surface
85: step portion
87: separate portion
89: groove portion
90: inverter-side bus bar
91: inverter-side terminal
91a: inverter-side connection surface
92: inverter-side fastening hole
100: motor-side bus bar
101: motor-side terminal (terminal)
101a: motor-side connection surface
102: motor-side fastening hole
110: fixture
120: O-ring
130: fastener
140: fastener
150: first motor block (first casing)
151: first bottom wall portion
152: first side wall portion
153: first space
160: second motor block (second casing)
161: second bottom wall portion
162: second side wall portion
162a: front wall portion
163: second space
164: service hole
165: lid
170: thermometer (first sensor)
171: thermometer wire (first wire)
172: thermometer connector (first connector)
180: external connector
181: external connector wire (second wire)
182: relay connector (second connector)
183: rotational position detection sensor (second sensor)
184: rotational position detection sensor wire (third wire)
185: bracket
190: wire harness
195: inverter-side connector

## Claims

1. A rotary electric machine comprising:
• a terminal block (50) that holds a terminal (101) electrically connected to a stator (33); and
• a casing (40) that accommodates the stator and the terminal block,
wherein:
• the casing is formed by combining a first casing (150) and a second casing (160),
• the first casing holds the terminal block, a first sensor (170), a first wire (171) extending from the first sensor, and a first connector (172) provided to the first wire,
• the second casing holds an external connector (180) exposed to the outside of the casing and connectable from the outside of the casing, a second wire (181) extending from the external connector, and a second connector (182) provided to the second wire,
• the second casing has a service hole (164) for facing the terminal block from the outside of the casing when the first casing and the second casing are combined to constitute the casing,
• the first connector and the second connector correspond to be connectable to each other, and
• the first connector is arranged at a position that can be faced from the outside of the casing via the service hole when the first casing and the second casing are combined to constitute the casing.

2. The rotary electric machine according to claim 1, wherein
• the second wire (181) has a length capable of taking the second connector (182) to the outside of the second casing (160) via the service hole.

3. The rotary electric machine according to claim 1 or 2, wherein
• the second casing (160) holds a second sensor (183), and
• the second sensor is connected to the external connector (180) via a third wire (184).

4. The rotary electric machine according to claim 1 or 2, wherein
• the terminal block (50) is made of a resin, and
• the first wire (171) extends in a manner that the first connector (172) is arranged on an opposite side of the terminal block (50) from the terminal (101).

5. The rotary electric machine according to claim 1 or 2, wherein
• the second wire (181) extends in a manner that the second connector (182) is located below the terminal (101) when the first casing (150) and the second casing (160) are combined to constitute the casing (40).

6. The rotary electric machine according to claim 1 or 2, wherein
• the first sensor (170) is a thermometer.

7. The rotary electric machine according to claim 3, wherein
• the second sensor (183) is a rotational position detection sensor.

8. The rotary electric machine according to claim 1 or 2, wherein
• the terminal block (50) has a flow path (57) through which a refrigerant (C) flows.

9. The rotary electric machine according to claim 1 or 2, mounted on a vehicle (1).

10. A method for manufacturing the rotary electric machine according to claim 2, the method comprising:
• a preparation step of preparing the first casing (150) and the second casing (160);
• a take-out step of taking the second connector (182) to the outside of the second casing (160) via the service hole (164);
• an assembly step of combining the first casing (150) and the second casing (160) to constitute the casing (40); and
• a connection step of connecting the first connector (172) and the second connector (182) by using the service hole (164).
